# EUROPEAN PATENT APPLICATION

(11) **EP 3 777 558 A1**
(43) Date of publication of application: **17.02.2021**
(21) Application number: 19775481.5
(22) Date of filing: 29.03.2019
(51) Int. Cl.: A23L 5/00, A23J 3/16

(54) **PROTEIN-CONTAINING EMULSIFIED OIL OR FAT COMPOSITION FOR PRODUCING EMULSIFIED FOOD**

(30) Priority: 30.03.2018 JP 2018066889
(71) Applicant: Fuji Oil Holdings Inc., Izumisano-shi, Osaka 598-8540 (JP)
(72) Inventor: KANO, Hiroshi, Izumisano-shi, Osaka 598-8540 (JP); MOTOYAMA, Takayasu, Izumisano-shi, Osaka 598-8540 (JP)
(74) Representative: Boult Wade Tennant LLP
(86) International application number: PCT/JP2019/014140
(87) International publication number: WO 2019/189810

(57) **Abstract**

A protein-containing emulsified oil or fat composition for producing an emulsified food, said emulsified composition comprising 10-70 mass% of a protein, 30-90 mass% of an oil or fat and 0-40 mass% of a carbohydrate, when the total amount of the protein, oil or fat and carbohydrate is regarded as 100 mass%, characterized in that at least 50 mass% of the protein is derived from a vegetable protein material satisfying all of the requirements a) to d): a) having a protein content in solid matters of 70 mass% or more; b) having an NSI of 80 or more; c) the results of molecular weight distribution measurement thereof showing an area ratio of 10000 Da or more of 50-80% and an area ratio of 2000 Da or more and less than 10000 Da of 10-40%; and d) when heated at 80°C for 30 minutes, a 22 mass% solution thereof not gelling.

## Description

### Technical Field

### Related application

This application claims the benefit of priority of Application No. 2018-66889 filed to the Japan Patent Office on March 30, 2016. The entire priority application is incorporated herein by reference.

The present invention relates to a protein-containing fat emulsion composition for producing an emulsified food.

### Background Art

A milk protein such as casein has low viscosity in a high concentration solution, and has high emulsifiability and solubility. Thus, it has been widely used in emulsified foods including oil in water emulsion such as cream and whitener, water in oil emulsion such as margarine, and thick liquid food.

Meanwhile, substitution of a food containing animal protein with a food containing vegetable protein has been attempted due to an anxiety about food supply accompanying an increase in population.

However, vegetable protein, such as soybean protein and pea protein, is generally inferior to milk protein in terms of high viscosity when dissolved in a solution, solubility, mineral resistance and heat resistance such as retort heat resistance, and tends to cause a problem such as thickening and occurring aggregation. Thus, an adding amount of vegetable protein tends to be limited. Thus, it is the current situation that using vegetable protein as a substitute for milk protein is not progressed.

Until now, there have been provided several techniques, such as technique for combining vegetable protein with various emulsifiers and additives and technique for improving vegetable protein itself, for the purpose of substituting milk protein with vegetable protein.

For example, Patent Document 1 provides a technique of enzymatically decomposing isolated soybean protein while adding reducing sugar to the isolated soybean protein and heat-treating it to promote Maillard reaction. In addition, Patent Document 2 provides a technique including heating protein at 140°C for about 30 seconds, enzymatically decomposing the heated protein, and then adding fat. These are intended to improve vegetable protein material to reduce the viscosity while maintaining the solubility of the protein.

### Prior Art Documents

### Patent Documents

Patent Document 1: WO 2009/84529 A1
Patent Document 2: WO 2017/141934 A1

### Summary of Invention

### Problems to Be Solved by Invention

Each manufacturer which manufactures emulsified food, such as thick liquid food and whitener, attempts to add vegetable protein material, for example, by using caseinate in combination, and by using various emulsifiers and thickening polysaccharides in combination. However, other raw materials, such as fat, carbohydrate, emulsifier, mineral and buffer salt, to be added with vegetable protein, or manufacturing conditions, such as mixing process and heating process, may vary depending on each manufacturer and its product group. Thus, determining formulation with considering an influence of various factors on a quality of emulsified food requires a difficult task for each product. Even if a high-quality emulsified food is obtained, it is limited to an original technique for a specific product of each manufacturer, and thus it is difficult to generally use the technique in the production of any emulsified food.

Thus, the present inventors address a problem to provide an intermediate material which may be generally used in a production of various emulsified foods containing a vegetable protein material, more specifically, to provide an intermediate material which enables to produce an emulsified food containing a vegetable protein material having a good physical property, such as viscosity and emulsion stability, by assembling a simple formulation without excessive trial and error, such as using caseinate in combination, and using various emulsifiers and thickening polysaccharides in combination.

### Means for Solving Problems

The present inventors have found a novel protein-containing fat emulsion composition obtained by mixing specific composition range of fat, protein and carbohydrate, and specific vegetable protein material selected as a protein, in combination. They have also found that the composition is useful as an intermediate material which may be used as a raw material for manufacturing various emulsified foods containing a vegetable protein material. The present invention has been completed by these findings.

There is no prior art which prepares a protein-containing emulsion composition by combining specific range of fat, protein and carbohydrate, and specific vegetable protein material as a protein, and applies the composition for producing various emulsified foods.

That is, the present invention encompasses the following aspects:
(1) a protein-containing fat emulsion composition for use in a production of emulsified food, including 10 to 70% by mass protein, 30 to 90% by mass fat and 0 to 40% by mass carbohydrate, with respect to a total amount of protein, fat and carbohydrate, which is assumed as 100% by mass, where 50% by mass or more of the protein is derived from a vegetable protein material having all the following characteristics a) to d):
   a) a protein content in a solid content is 70% by mass or more,
   b) NSI is 80 or more,
   c) measured molecular weight distribution shows that an area ratio of 10000 Da or more is 50 to 80%, and that an area ratio of 2000 Da or more to less than 10000 Da is 10 to 40%,
   d) gel is not formed by heating 22% by mass the protein solution at 80°C for 30 minutes;
(2) the protein-containing fat emulsion composition for use in a production of emulsified food of (1), where the composition contains 20 to 60% by mass protein and 40 to 80% by mass fat, with respect to a total amount of protein, fat and carbohydrate, which is assumed as 100% by mass;
(3) the protein-containing fat emulsion composition for use in a production of emulsified food of (1), where an area ratio of less than 2000 Da in the measured molecular weight distribution is 13% or less;
(4) the protein-containing fat emulsion composition for use in a production of emulsified food of (1), where the area ratio of 10000 Da or more is 60 to 75%, the area ratio of 2000 Da or more to less than 10000 Da is 10 to 35%, and where the area ratio of less than 2000 Da is 9% or less;
(5) the protein-containing fat emulsion composition for use in a production of emulsified food of (1), where the composition does not contain a milk protein;
(6) the protein-containing fat emulsion composition for use in a production of emulsified food of (1), where the composition does not contain an animal protein;
(7) the protein-containing fat emulsion composition for use in a production of emulsified food of (1), where an aqueous solution of the vegetable protein material containing 10% by mass protein has 50 mPa·s or less of viscosity;
(8) the protein-containing fat emulsion composition for use in a production of emulsified food of (1), where an average particle diameter of the composition is 1 µm or less;
(9) the protein-containing fat emulsion composition for use in a production of emulsified food of (1), further including a polyvalent metal ion;
(10) an emulsified food including the protein-containing fat emulsion composition for use in a production of emulsified food of any of (1) to (9);
(11) the emulsified food of (10), where the food contains 0.1 to 99% by mass the protein-containing fat emulsion composition relative to the emulsified food;
(12) the emulsified food of (10), where the emulsified food does not contain caseinate, but general type of the emulsified food contains caseinate;
(13) the emulsified food of (10), which is thick liquid food or whitener.

### Effect of Invention

By using the protein-containing fat emulsion composition of the present invention, each manufacturer of emulsified food may simply produce various emulsified foods containing vegetable protein material having high emulsion stability and maintaining mineral resistance and heat resistance without excessive trial and error, such as using caseinate in combination, and using various emulsifiers and thickening polysaccharides in combination.

In addition, an emulsified food having a desired component composition may be easily produced simply by adjusting a formulation by adding the protein-containing fat emulsion composition of the present invention and adding a secondary raw material, such as flavor and sweetener, without adding protein, fat, or carbohydrate as another raw material, though it is depending on a composition of emulsified food to be produced.

### Mode for Carrying Out Invention

A protein-containing fat emulsion composition for use in a production of emulsified food as one aspect of the present invention is an emulsified composition including 10 to 70% by mass protein, 30 to 90% by mass fat and 0 to 40% by mass carbohydrate, with respect to a total amount of protein, fat and carbohydrate, which is assumed as 100% by mass, where 50% by mass or more of the protein is derived from a vegetable protein material having all the following characteristics a) to d):
a) a protein content in a solid content is 70% by mass or more,
b) NSI is 80 or more,
c) measured molecular weight distribution shows that an area ratio of 10000 Da or more is 50 to 80%, and that an area ratio of 2000 Da or more to less than 10000 Da is 10 to 40%,
d) gel is not formed by heating 22% by mass the protein solution at 80°C for 30 minutes.

Hereinafter, embodiments of the present invention will be described in detail.

### (Protein-containing fat emulsion composition)

A protein-containing fat emulsion composition as one aspect of the present invention (hereinafter, also referred to as "present emulsion composition") means an emulsion composition containing a vegetable protein material and a fat. The present emulsion composition is used for a production of various emulsified foods, and may also be provided to manufacturers of emulsified food as an intermediate raw material product. A form of the product may be any form, such as liquid, paste and solid, depending on the manufacturer's request. Examples of preferable solid form include powder and granule.

### (Component composition of present emulsion composition)

The present emulsion composition has a specific range of component composition with assuming that a total amount of protein, fat and carbohydrate is 100% by mass. That is, the component composition is 10 to 70% by mass protein, 30 to 90% by mass fat, and 0 to 40% by mass carbohydrate. The carbohydrate may not be an essential component, and may be 0% by mass.

In the component composition, a lower limit of the protein may be 15% by mass, 20% by mass, 25% by mass, 30% by mass, 35% by mass or 40% by mass, and an upper limit of the protein may be 65% by mass, 60% by mass, 55% by mass or 50% by mass.

In the component composition, a lower limit of the fat may be 35% by mass, 40% by mass, 45% by mass or 50% by mass, and an upper limit of the fat may be 85% by mass, 80% by mass, 75% by mass or 70% by mass.

In the component composition, a lower limit of the carbohydrate may be 1% by mass, 2% by mass, 5% by mass or 10% by mass, and an upper limit of the carbohydrate may be 35% by mass, 30% by mass, 25% by mass or 20% by mass.

By including protein, fat and carbohydrate as a stable emulsion composition in the above component composition range, components necessary for emulsified food may be added to an emulsified food in already stabilized state. And, it enables to reduce an amount of protein, fat and carbohydrate to be added separately. It not only reduces labor and cost of separately preparing and blending raw materials, but also reduces risk of destabilization of emulsification system due to the raw materials separately added in the emulsified food.

### (Vegetable protein material)

As used herein, a "vegetable protein material" refers to a food material containing vegetable protein as a main component and used as a raw material for various processed foods and beverages. Examples of an origin of the vegetable protein material include bean such as soybean, pea, mung bean, lupin, chickpea, kidney bean, lentil and black-eyed pea; seed such as sesame, canola seed, coconut seed and almond seed; grain such as corn, Buckwheat, wheat and rice; vegetable; and fruit. For example, a protein material derived from soybean is prepared by further concentrating protein from a soybean raw material such as defatted soybean or whole soybean, and generally includes isolated soybean protein, concentrated soybean protein, powdered soymilk, and various processed products thereof, on a conceptual basis.

In an embodiment, 50% by mass or more of protein contained in the present emulsion composition is a vegetable protein. And, it may be more preferably 55% by mass or more, 60% by mass or more, 65% by mass or more, 70% by mass or more, 75% by mass or more, 80% by mass or more, 85% by mass or more, 90% by mass or more, 95% by mass or more, or 97% mass or more. Further, most preferably 100% by mass is a vegetable protein, and it is preferable that no animal protein such as milk protein is contained. It enhances the effect of substitution of animal protein by vegetable protein. In certain embodiment, it is preferable that at least milk protein is not contained.

The present emulsion composition contains protein, fat and carbohydrate in the above composition range, and it is not sufficient that any vegetable protein material is selected as the protein, and it is important to select the specific vegetable protein material shown below and to combine it in the above composition range.

### a) Protein purity

The specific vegetable protein material used in the present emulsion composition has a protein content of 70% by mass or more in a solid content. The value of the protein content may be 80% by mass or more, 85% by mass or more, or 90% by mass or more.

As a type of vegetable protein material included in the above range, isolated protein is preferable. For example, isolated soybean protein is included in the case of soybean-derived protein material.

Using a vegetable protein material having a high protein purity within the above range is suitable for efficiently increasing protein content in an emulsified food. When a protein material having a low protein content similar level as soymilk is used, it is necessary to mix the material in a larger amount in order to make the protein content high. When the adding amount is large, another problem such as limitation on blending of other raw materials tends to occur.

### b) NSI of protein

The specific vegetable protein material used in the present emulsion composition has 80 or more NSI (Nitrogen Solubility Index), which is used as an index of protein solubility. More preferably, the material having 85 or more, 90 or more, 95 or more, or 97 or more NSI may be used. For example, as a vegetable protein material having a high NSI, it is preferable to use a mineral which is not or slightly subjected to protein-insolubilizing treatment, such as enzymatic decomposition treatment and mineral-adding treatment.

High NSI of the vegetable protein material indicates high dispersibility in water, which may contribute to a dispersion stability of the present emulsion composition. If NSI is too low, precipitation tends to occur, which is not preferable.

NSI is expressed as ratio (% by mass) of water-soluble nitrogen (crude protein) to total nitrogen content and determined by a prescribed method. In the present invention, NSI is determined by the method described later.

### c) Molecular weight distribution

The specific vegetable protein material used in the present emulsion composition has an area ratio of molecular weight distribution, measured by gel filtration, of 50 to 80% for 10,000 Da or more, and 10 to 40% for 2000 Da or more and less than 10000 Da. In addition, in one embodiment, the area ratio for less than 2000 Da is 15% or less.

In addition, the area ratio for 10000 Da or more is preferably 55 to 75%, 60 to 75%, 60 to 70% or 65 to 75%.

Further, the area ratio for 2000 Da or more and less than 10000 Da is preferably 10 to 35%, 15 to 35%, 10 to 30% or 20 to 30%.

Moreover, the area ratio for less than 2000 Da is preferably 15% or less, 13% or less, 9% or less, 8% or less or 7% or less. The lower limit is not particularly limited, and examples thereof include 0% or more, 1% or more, 1.5% or more, 2% or more and 3% or more.

These ranges of the molecular weight distribution of vegetable protein material show that many of them have a lower molecular weight than the undecomposed protein that has not been subjected to any decomposition treatment, and that the number of highly-decomposed low-molecular-weight peptides is small. These molecular weight distribution of the vegetable protein may contribute to size of emulsified particles of the present emulsion composition.

Measurement of molecular weight distribution is based on the method described later.

### d) Heat gelation property

The specific vegetable protein material used in the present emulsion composition preferably does not show gelation property when a solution of the material is heated at a high concentration. Presence or absence of gelation property will be confirmed in more detail by the method described later, but it is important that the 22% by mass solution does not gel when it is heated at 80°C for 30 minutes.

Absence of heat gelation property of vegetable protein material shows that a viscosity of solution of the present emulsion composition is low, and that the viscosity of the emulsion composition does not increase even when heated by for example, retort heating. And, it contributes to stability of the present emulsion composition against temperature change. When it has a heat gelation property, the emulsion composition is thickened by heating, and mixing property with other raw material such as emulsifier and flavor will be deteriorated in the production of emulsified food. Thus, it is not preferable.

A vegetable protein material having high NSI generally exhibits gelation property by heating in a high concentration solution thereof. In addition, a vegetable protein in which an area ratio of high molecular weight region in the molecular weight distribution is low becomes hard to exhibit heat gelation property, while NSI is generally less than 90 and solubility is generally lowered. However, the specific vegetable protein material used in the present emulsion composition does not show gelation property by heating while keeping NSI of the protein high, by slightly lowering the area ratio for high molecular weight region.

### e) Viscosity

Viscosity is not an essential property in the specific vegetable protein material used in the present emulsion composition as long as the properties a) to d) are satisfied, but it is preferable that the viscosity of the vegetable protein material solution measured under certain conditions is low. More specifically, the viscosity is preferably 50 mPa·s or less, preferably 40 mPa·s or less, more preferably 35 mPa·s or less, further preferably 30 mPa·s or less, still more preferably 20 mPa·s or less, and further more preferably 15 mPa·s or less. In addition, a lower limit of the viscosity is not particularly limited, and examples thereof include 0.5 mPa·s or more and 1 mPa·s or more.

The viscosity is measured by the method described later.

### f) Molecular weight distribution adjustment process

The above vegetable protein material may be obtained by slightly decomposing a vegetable protein, or by certainly decomposing a vegetable protein followed by adjusting a molecular weight in combination with a technique such as filtration, gel filtration, chromatography, centrifugation, and electrophoresis to the ratio of the above molecular weight. Further, a slight denaturation treatment may be combined with the above treatment, or a denaturation treatment may not be performed. Examples of treatment for decomposing or denaturing proteins include enzyme treatment, acid treatment, alkali treatment, heat treatment, cooling treatment, high pressure treatment, reduced pressure treatment, organic solvent treatment, mineral addition treatment, supercritical treatment, ultrasonic treatment, electrolysis, and a combination thereof. In addition, in the case of combining treatments, all the treatments may be continuously performed from the raw material, or there may be a time lag between the treatments. For example, a commercially available product that has undergone a certain treatment may be used as a raw material for another treatment. Conditions of these treatments, such as enzyme activity, concentration of acid, alkali, solvent, and mineral, temperature, pressure, output intensity, current, and time, may be appropriately set by those skilled in the art. As used herein, such treatment is referred to "molecular weight distribution adjustment process". As long as the above characteristics are satisfied, a mixture of a vegetable protein material that has undergone a molecular weight distribution adjustment process and a vegetable protein that has not undergone a molecular weight distribution adjustment process may be a specific vegetable protein material used in the present emulsion composition. In this case, a ratio of both proteins (vegetable protein material that has undergone the molecular weight distribution adjustment process:vegetable protein that has not undergone the molecular weight distribution adjustment process) may be adjusted as appropriate within the range that satisfies the above characteristics. Examples of the ratio include 1:99 to 99:1, for example 50:50 to 95:5, and 75:25 to 90:10. In one embodiment, only the vegetable protein material that has undergone the molecular weight distribution adjustment process is the specific vegetable protein material used in the present emulsion composition.

### (Fat)

A fat contained in the present emulsion composition is not particularly limited and may be vegetable or animal fat. For example, vegetable fat such as soybean oil, rapeseed oil, corn oil, cottonseed oil, peanut oil, sunflower oil, rice bran oil, safflower oil, olive oil, sesame oil, palm oil, palm kernel oil and coconut oil; animal fat such as beef tallow, milk fat, fish oil and lard; processed fat thereof such as fractionated fat, hydrogenated fat and interesterified fat; and mixed fat thereof. Generally, a liquid to semi-solid fat having a low melting point is preferable for preparing an oil in water emulsion, and a solid to extremely hydrogenated fat is preferable for preparing a powdered emulsion composition. When it is better to avoid animal raw materials due to health problems such as accumulation of cholesterol, it is preferable to use vegetable fat instead of animal fat.

### (Carbohydrate)

Specific examples of carbohydrate contained in the present emulsion composition include starch-containing sugar and dietary fiber. More specifically, examples of carbohydrate include fructose, glucose, sucrose, maltose, lactose, trehalose, starch syrup, coupling sugar, honey, isomerized sugar, invert sugar, oligosaccharide (e.g. isomaltooligosaccharide, reduced xylooligosaccharide, reduced gentiooligosaccharide, xylooligosaccharide, gentiooligosaccharide, nigerooligosaccharide, theandeorigosaccharide and soybean oligosaccharide), sugar alcohol (e.g. maltitol, erythritol, sorbitol, palatinit, xylitol, lactitol and reduced starch syrup), dextrin, and starch (e.g. raw starch and modified starch). Examples of dietary fiber include polydextrose, indigestible dextrin, crystalline cellulose and thickening polysaccharide.

### (Other raw materials)

Although not essential for the present emulsion composition, other various raw materials may be contained as necessary according to an embodiment of the present emulsion composition and an embodiment of an emulsified food product as the final product.

### o Emulsifier

The present emulsion composition may or may not contain an emulsifier. Examples of the emulsifier include glycerin fatty acid ester, polyglycerin fatty acid ester, sucrose fatty acid ester, propylene glycol fatty acid ester, sorbitan fatty acid ester, organic acid monoglyceride, polysorbate and lecithin. These emulsifiers may be used alone or in combination of two or more.

An adding amount of the emulsifier in the present emulsion composition may be appropriately adjusted according to an embodiment of the present emulsion composition and an embodiment of emulsified food product as the final product. An example of the adding amount is 0.3 to 2.5% by mass.

### o Polyvalent metal ion

The present emulsion composition may or may not contain a polyvalent metal ion. Examples of the polyvalent metal ion include, in addition to calcium and magnesium as typical polyvalent metal ion, other polyvalent metal ion such as iron, zinc, copper, selenium, chromium, cobalt, manganese and molybdenum. Although it may be added in any form of salt, such as chloride and sulfide, a form of salt having high solubility, such as calcium chloride, is preferable. In one embodiment, the present invention may provide the present emulsion composition having highly mineral resistance. One characteristic in the embodiment is that aggregation is hard to be occurred in a heat treatment in a production process of the present emulsion composition or the emulsified food regardless of containing a polyvalent metal ion. Thus, it is useful for producing emulsified food such as thick liquid food that requires an addition of polyvalent metal ion. In the embodiment, it is preferable that the present emulsion composition contains the above emulsifier.

### o Salt

The present emulsion composition may or may not contain salt. Examples of salt include organic acid salt such as sodium citrate; phosphate such as dibasic sodium phosphate, dibasic potassium phosphate and sodium polyphosphate; and sodium bicarbonate. More specifically, when a salt is used, it is preferably contained in the present emulsion composition in an amount of 0.05 to 3.0% by mass, preferably 0.1 to 1.0% by mass.

### o Other additives

Other additives such as flavor, colorant and thickening polysaccharide may or may not be added to the present emulsion composition for the purpose of adjusting taste, color, sweetness and viscosity, as needed.

### (Average particle diameter of emulsion composition)

In one embodiment, the present emulsion composition has an average particle diameter of 1 µm or less, preferably 0.9 µm or less, more preferably 0.8 µm or less, further preferably 0.7 µm or less, still more preferably 0.6 µm or less. When the average particle diameter is in the range, the emulsion stability becomes better. The method for measuring the average particle diameter is described later.

### (Aspect of preparing the present emulsion composition)

An aspect of preparing the present emulsion composition are shown below, but the present invention is not limited to the aspect.

The present emulsion composition is obtained by mixing the above specific vegetable protein material, fat, carbohydrate, water, and if any emulsifier, and mineral, and homogenizing the mixed solution with a high-pressure homogenizer. A specific method for preparing the emulsion may be a known method, and a specific example will be described later.

### o Vegetable protein material

The present emulsion composition may be prepared using the above specific vegetable protein material. Typically, the present emulsified composition may be prepared using a vegetable protein material that has undergone a molecular weight distribution adjustment process as a raw material. Alternatively, the specific vegetable protein material may be easily obtained by purchasing from a manufacturer of vegetable protein material, for example, Fuji Oil Co., Ltd., or by requesting the manufacturer to prepare it. Meanwhile, for example, some conventional commercially available soybean protein materials such as "FUJIPRO E", "FUJIPRO CL", "FUJIPRO AL", "NEW FUJIPRO 4500", "PROLEENA RD-1", "PROLEENA 900", and "PROLEENA HD101R" do not fall under the vegetable protein material that satisfies all of the above characteristics a) to d). Thus, the present emulsion composition is not obtained from them. In addition, in an embodiment, the present emulsion composition may be prepared by subjecting a vegetable protein raw material to the molecular weight distribution adjustment process, for example, at the time of preparing the aqueous phase described below. In the embodiment, the present emulsion composition may be regarded as containing a vegetable protein material satisfying the above characteristics.

### o Mixing and homogenization

An aqueous phase of the present emulsion composition may be prepared in any temperature range. In a more specific embodiment, when a hydrophilic emulsifier or a carbohydrate whose solubility is improved by heating is contained, it may be prepared by dissolving or dispersing in a temperature range of, for example, 20 to 70°C, preferably 55 to 65°C. Those skilled in the art may appropriately determine a raw material to be added to the aqueous phase. For example, salt and water-soluble flavor may be added to the aqueous phase.

An oil phase may be prepared by mixing an oil-soluble material containing fat and dissolving or dispersing it in a temperature range of, for example, 50 to 80°C, preferably 55 to 70°C. Those skilled in the art may appropriately determine a raw material to be added to the oil phase. For example, a lipophilic emulsifier may be added to a part or all of the raw material fat.

The obtained oil phase and aqueous phase are heated to, for example, 40 to 80°C, preferably 55 to 70°C, and mixed to carry out pre-emulsification. The pre-emulsification may be carried out with a rotary stirrer such as homomixer. After the pre-emulsification, it is homogenized with a homogenization apparatus such as homogenizer. The pressure during the homogenization with a homogenizer may be 10 to 100 MPa, and preferably 30 to 100 MPa.

### o Heat sterilization

The obtained emulsion composition may or may not be heat-sterilized as necessary. For example, heat sterilization is performed, treating the composition with a UHT sterilization method with an indirect heating method or a direct heating method, and if necessary, homogenizing again by a homogenizer, and then cooling to 2 to 15°C. A temperature of the heat sterilization is, for example, 110 to 150°C, preferably 120 to 140°C, and a time of the heat sterilization is, for example, 1 to 10 seconds, preferably 3 to 7 seconds.

### o Preparation of product

The present emulsion composition obtained by the above may be preliminarily prepared by a manufacturer of emulsified food during the production of the emulsified food. Alternatively, product of the emulsion composition as an intermediate raw material for a production of emulsified food may be prepared by sealing and packing the emulsion composition in a liquid form, paste form or powder form. The obtained product may be provided to a manufacturer of an emulsified food.

### (Characteristics of the present emulsion composition)

In one embodiment, the present emulsion composition has an extremely small emulsified particle diameter of 1 µm or less, preferably 0.9 µm or less immediately after the preparation. In another embodiment, the present emulsion composition may be adjusted to have the above emulsion particle diameter without adding lecithin or synthetic emulsifier. In a further embodiment, the present emulsion composition has a low viscosity and a high emulsion stability, for example, the emulsion does not easily break during heat treatment.

Furthermore, in one embodiment, the present emulsified composition has high mineral resistance, and the characteristics of low viscosity and high emulsion stability are hardly lost by adding a divalent metal ion such as calcium. Preferred examples of the viscosity include 50 mPa·s or less, 40 mPa·s or less, 35 mPa·s or less, 30 mPa·s or less, 20 mPa·s or less, 15 mPa·s or less. A lower limit of the viscosity is not particularly limited, and examples thereof include 0.5 mPa·s or more and 1 mPa·s or more.

### (Emulsified food)

In one embodiment, an emulsified food containing the present emulsion composition is a food product of which the whole food product has an emulsified form such as oil in water emulsion, water in oil emulsion, water in oil in water emulsion, oil in water in oil emulsion. In more preferred embodiment, the emulsified food is an emulsified food generally containing caseinate, and specific examples of the emulsified food include liquid food, whitener, creaming powder, ice cream, ice milk (ice cream meeting 10% or more of milk solids and 8.0% or more of milk fat), lacto ice (ice cream meeting 3% or more of milk solids), whipped cream, flour paste, margarine, infant formula, powdered emulsified beverage containing fat, liquid emulsified beverage containing fat, cheese-like food, mayonnaise-like food, powdered fat, and emulsified fat. In one embodiment, a preferred emulsified food of the present invention is the above type emulsified food, and having ratio (mass ratio) of caseinate/protein in a protein material contained in the present emulsion composition of, for example, 1 or less, 0. 5 or less, 0.25 or less, 0.1 or less, 0.05 or less, or 0.01 or less. In the most preferred embodiment, the emulsified food of the present invention does not contain a caseinate. The emulsified food may be produced by adding the present emulsion composition at the time of mixing raw materials and using a general method for each type of emulsified food. Accordingly, in one aspect, the present invention relates to a method of producing the above type emulsified food product including adding the present emulsion composition, and in certain embodiment, the present invention relates to a method of producing the above type emulsified food product including substituting a caseinate with the present emulsion composition.

An amount of the present emulsion composition added to an emulsified food is not particularly limited and may be appropriately adjusted by those skilled in the art according to the type of the emulsified food. In addition, in the case of an emulsified food generally containing caseinate, an adding amount of the present emulsion composition may be determined according to the amount of caseinate. More specific examples include 0.1 to 99% by mass, 0.5 to 95% by mass, 1 to 90% by mass, 2 to 80% by mass, 2.5 to 50% by mass, and 3 to 30% by mass, 3.5 to 20% by mass, 4 to 15% by mass, 5 to 10% by mass, and 0.5 to 5 % by mass relative to the emulsified food. In certain embodiment, the present emulsion composition as it is may be used as an emulsified food.

In one embodiment, preferred examples of a viscosity of the emulsified food include 50 mPa·s or less, 40 mPa·s or less, 35 mPa·s or less, 30 mPa·s or less, 20 mPa·s or less and 15 mPa·s or less. In addition, a lower limit of the viscosity is not particularly limited, and examples thereof include 0.5 mPa·s or more and 1 mPa·s or more.

Further, in one embodiment, preferred examples of an average particle diameter of the emulsified food immediately after the preparation include 1 µm or less and 0.9 µm or less.

As used herein, a liquid food refers to a liquid nutritional composition having a form such as soup without chunk, potage, milk beverage and fruit juice. In one embodiment, the liquid food contains protein, fat, carbohydrate, mineral and vitamin as nutritional components, and has a caloric value of 0.5 kcal/ml or more. Preferably, it has energy composition of 10 to 25% protein, 15 to 45% fat, and 35% or more carbohydrate, and a composition of 20 to 110 mg/100kcal calcium and 10 to 70 mg/100kcal magnesium. More preferably, it has energy composition of 16 to 20% protein, 20 to 30% fat, and 50 to 65% carbohydrate, and a composition of 35 to 65 mg/100kcal calcium and 15 to 40 mg/100kcal magnesium. In addition, for example, a liquid food containing a vegetable protein material contained in the present emulsion composition as a protein in an amount of 50% by mass or more, preferably 60% by mass or more relative to the total protein is preferable. An upper limit of an amount of the vegetable protein material contained in the present emulsion composition to the liquid food is not particularly limited, and examples thereof include 100% by mass or less, 95% by mass or less, and 90% by mass or less as a protein relative to the total protein in the liquid food. Further, a liquid food having a low osmotic pressure that minimizes side effects such as diarrhea, fluidity that allows passage through a thin tube, good flavor, and emulsion stability that enables to be stored at room temperature for several months are preferable.

As used herein, a whitener refers to an oil in water emulsion containing protein and fat as components. The whitener is also called as coffee whitener or creamer, and is mainly used for imparting a mild feeling to food having a bitter taste such as coffee, and is used not only for beverage such as coffee and tea, but also for being put on coffee jelly, pudding, and fruit jelly. In one embodiment, the whitener as one aspect of the present invention is the present emulsion composition as it is. In addition, in another embodiment, the whitener contains, in addition to the present emulsion composition, raw material such as fat, and optionally emulsifier and phosphate. In addition, for example, a whitener containing a vegetable protein material contained in the present emulsion composition as a protein in an amount of 50% by mass or more, preferably 60% by mass or more relative to the total protein is preferable. An upper limit of an amount of the vegetable protein material contained in the present emulsion composition to the whitener is not particularly limited, and examples thereof include 100% by mass or less, 95% by mass or less, and 90% by mass or less as a protein relative to the total protein in the whitener. The whitener may be produced, for example, by using the method described in WO 2010/073575 A and JP 2016-189719 A.

### (Measuring method)

Measurement of component and physical property of the present emulsion composition and raw material thereof are according to the following methods, herein.

### <Protein content>

A protein content is measured by Kjeldahl method. Specifically, mass of nitrogen from a protein material dried at 105°C for 12 hours is measured by Kjeldahl method and expressed as "by mass" as the protein content in the dried product. The nitrogen conversion coefficient is 6.25. Basically, it is calculated by rounding off to one decimal place.

### <Fat (lipid) content>

A fat content is measured by acid hydrolysis method. Basically, it is calculated by rounding off to one decimal place.

### <Carbohydrate>

A carbohydrate content is a value obtained by subtracting contents of water, protein, fat, and ash (measured by direct ashing method) from the sample.

### <NSI>

To 3 g of sample is added 60 ml of water. The mixture is stirred at 37°C for 1 hour, and then centrifuged at 1400 × g for 10 minutes to obtain supernatant (I). To the residual precipitate is added 100 ml of water. The mixture is stirred at 37°C for 1 hour, and then centrifuged to obtain supernatant (II). The supernatant (I) and supernatant (II) are combined, and water is added to 250 ml. After filtering the mixture with No.5 filter paper, nitrogen content in the filtrate is determined by Kjeldahl method. At the same time, nitrogen content in the sample is determined by Kjeldahl method. NSI is the ratio of nitrogen in the filtrate (water-soluble nitrogen) to total nitrogen in the sample, and expressed as % by mass. Basically, it is calculated by rounding off to one decimal place.

### <Molecular weight distribution>

A sample solution is prepared by adding an eluent to a protein material to adjust a concentration of the solution to 0.1% by mass, and then filtering the solution with a 0.2 µm filter. A gel filtration system is assembled by connecting two types of columns in series. First, known protein or the like as a molecular weight maker (Table 1) is charged, and a calibration curve is obtained in the relationship between the molecular weight and the retention time. Next, the sample solution is charged, and the content ratio% of each molecular weight fraction is determined by the ratio of the area of specific molecular weight range (time range) to the total absorbance chart area (1st column: "TSK gel G3000SW_{XL}" (Manufactured by SIGMA-ALDRICH), 2nd column: "TSK gel G2000SW_{XL}" (manufactured by SIGMA-ALDRICH), eluent: 1% SDS + 1.17% NaCl + 50 mM phosphate buffer (pH 7.0), 23°C, flow rate: 0.4 ml/min, detection: UV220nm). Basically, it is calculated by rounding off to one decimal place.

**[Table 1]**

| Molecular weight marker | |
|---|---|
| Marker | Molecular weight |
| Thyroglobulin | 335,000 |
| γ-globulin | 150,000 |
| Albumin | 67,000 |
| Peroxidase | 43,000 |
| Myoglobin | 18,000 |
| Cytochrome C | 12,384 |
| Insulin | 5,734 |
| Glutathione | 307 |
| p-aminobenzoic acid | 137 |

### <0.22M TCA solubility >

A value of 0.22M TCA solubility is measured by adding 0.44M trichloroacetic acid (TCA) to 2% by mass aqueous solution of protein material and determining a proportion of soluble nitrogen by Kjeldahl method. Basically, it is calculated by rounding off to one decimal place.

### <Heat gelation property>

A protein material is dissolved in water to a concentration of 22% by mass, and pH of the solution is adjusted to 7, and the solution is subjected to centrifuge and defoam to make a slurry. The slurry is filled to a casing tube and heated at 80°C for 30 minutes, and then refrigerated overnight and returned to room temperature to prepare a sample for physical property evaluation.

When the casing of the sample is peeled off, a sample which is liquid or amorphous paste-like is defined as "absent of heat gelation property". In addition, a sample maintaining the shape before peeling is defined as "present of gelation property".

### <Interfacial tension>

A protein material is dissolved in water so that the protein content is 10% by mass, then the solution is degassed, homogenized with a homogenizer at a pressure of 50 MPa, and then degassed again. The solution is diluted 10 times by the same steps, and 0.01% by mass concentration solution is used as a sample solution.

The sample solution is inserted with a syringe into a glass cell containing rapeseed oil adjusted to 20°C to prepare a droplet, and then measured with an interfacial tension measuring device (preferably manufactured by KYOWA) by pendant drop method. Basically, it is calculated by rounding off to one decimal place.

### <Centrifugal precipitation>

Presence or absence of centrifugal precipitation is observed as an accelerated test of stability during storage of protein-containing fat emulsion composition and protein material.

A protein-containing fat emulsion composition or 10% by mass aqueous solution of protein material is put into 50 mL-volume centrifuge tube in an amount of 35 mL, and centrifuged at 1500 × g (3000 rpm) for 10 minutes. The tube after centrifugation was slowly inverted to confirm the presence or absence of precipitation. A layer of precipitation is less than 3 mm: "-", 3 to 5 mm: "±", more than 5 mm: "+", and "+++" > "++" > "+" in descending order of the amount of precipitation.

### <Viscosity>

A viscosity of protein material is determined by preparing aqueous solution so that a protein content of the solution is 10% by mass, and measured with a B-type viscometer (preferably manufactured by Brookfield) using "#LV-1" rotor at 25°C. The viscosity is measured value after 1 minute at 100 rpm. If measurement cannot be performed using "#LV-1", rotor is changed to "#LV-2", "#LV-3", "#LV-4", and "#LV-5", in order. If it is impossible to measure due to low viscosity at "#LV-1"/100 rpm, it is evaluated as "lower limit". If it is impossible to measure due to high viscosity at "#LV-5"/100 rpm, it is evaluated as "off-scale high". The viscosity of the emulsion composition is measured as it is by the same method with the above viscometer.

### <Average particle diameter of emulsion>

An average particle diameter is measured with a laser diffraction particle distribution measuring device (preferably manufactured by Shimadzu Corporation), and the average particle diameter is calculated using the cumulative distribution on a volume basis. Basically, it is calculated by rounding off to one decimal place. If the value is low, it is calculated by rounding off to two decimal places.

### Examples

Hereinafter, embodiments of the present invention will be described more specifically by way of Examples. In Examples, "%" and "part" means "% by mass" and "part by mass", respectively, unless otherwise specified.

### (Production example)

### o Preparation of vegetable protein material

The following vegetable protein materials were obtained.
Sample A: a product obtained by subjecting Sample E to molecular weight distribution adjustment process (derived from soybean, test product prepared by Fuji Oil Co., Ltd.)
Sample B: a product obtained by subjecting Sample F to molecular weight distribution adjustment process (derived from pea, test product prepared by Fuji Oil Co., Ltd.)
Sample C: a product obtained by subjecting Sample G to molecular weight distribution adjustment process (derived from mung bean, test product prepared by Fuji Oil Co., Ltd.)
Sample D: a product obtained by subjecting Sample H to molecular weight distribution adjustment process (derived from soybean, test product prepared by Fuji Oil Co., Ltd.)
Sample E: isolated soybean protein (derived from soybean, commercially available from Fuji Oil Co., Ltd.)
Sample F: "NUTRALYS F85M" (derived from pea, commercially available from Rocket Japan Co., Ltd.)
Sample G: isolated mung bean protein (derived from mung bean, test product prepared by Fuji Oil Co., Ltd.)
Sample H: isolated soybean protein (derived from soybean, commercially available from Fuji Oil Co., Ltd.)
Sample I: isolated soybean protein (derived from soybean, commercially available from Fuji Oil Co., Ltd.)

Measured values of various components and physical properties of samples A to I are shown in Tables 2 and 3.

**[Table 2]**

| Major analysis value of various vegetable protein materials | | | | | |
|---|---|---|---|---|---|
| | Protein content (%, in dry matter) | NSI | Molecular weight distribution (%) | | |
| | | | 10,000 Da or more | 2,000 Da or more and less than 10,000 Da | Less than 2,000 Da |
| Sample A | 90.0 | 98.4 | 67.1 | 25.4 | 7.5 |
| Sample B | 84.5 | 93.7 | 70.7 | 22.4 | 6.8 |
| Sample C | 88.1 | 87.8 | 62.6 | 30.4 | 7.0 |
| Sample D | 90.6 | 98.4 | 51.9 | 35.1 | 13.0 |
| Sample E | 89.7 | 93.5 | **87.8** | **6.9** | 5.3 |
| Sample F | 84.9 | **88.0** | **84.0** | 10.9 | 5.0 |
| Sample G | 88.6 | **81.2** | **81.0** | 13.0 | 6.0 |
| Sample H | 91.6 | 90.0 | 72.4 | 21.4 | 6.2 |
| Sample I | 90.4 | **65.0** | 57.8 | 31.3 | 11.0 |

**[Table 3]**

| Major analysis value of various vegetable protein materials | | | | | |
|---|---|---|---|---|---|
| | TCA solubility (%) | Heat gelation property | Interfacial tension (mN/m) | Presence or absence of centrifugal precipitation | Viscosity (mPa·s) |
| Sample A | 13.2 | Absent | 16.9 | - | 11 |
| Sample B | 8.9 | Absent | 16.3 | - | 35 |
| Sample C | 9.3 | Absent | 16.0 | + | 14 |
| Sample D | 24.9 | Absent | 16.5 | + | 12 |
| Sample E | 3.1 | **Present** | 22.8 | - | 52 |
| Sample F | 3.7 | **Present** | 18.6 | - | 93 |
| Sample G | 3.7 | **Present** | 20.6 | ± | 25 |
| Sample H | 12.6 | **Present** | 19.4 | + | 9 |
| Sample I | 24.9 | Absent | 16.8 | +++ | 9 |

### o Preparation procedure

A protein-containing fat emulsion composition was prepared using the above samples A to I (see Table 4 for detailed formulation).

The vegetable protein material was dissolved in water at room temperature to prepare an aqueous phase.

Next, rapeseed oil was melted by heating at 60°C to prepare an oil phase.

The obtained aqueous phase and oil phase were mixed and stirred with a homomixer to carry out Pre-emulsification. This pre-emulsified liquid was homogenized at a pressure of 50 MPa with a homogenizer, then heat sterilized at 140°C for 4 seconds with a direct steam injection sterilizer, and then homogenized at a pressure of 50 MPa again. After the emulsification treatment, it was cooled to 5°C with a plate cooler to obtain a protein-containing fat emulsion composition.

### (Test Example 1)

Average particle diameter and viscosity of each emulsion composition obtained in Production example were measured, and the quality evaluation results are summarized in Table 4.

**[Table 4]**

| Formulation of each protein-containing fat emulsion composition and result of quality evaluation | | | | | | | | |
|---|---|---|---|---|---|---|---|---|
| | Water phase | | | Oil phase | P/O ratio | Average particle diameter (µm) | Viscosity (mPa·s) | Presence or absence of centrifugal precipitation |
| | Vegetable protein material (%) | | Water (%) | Oil (%) | | | | |
| Example 1 | Sample A | 10 | 85 | 5 | 67:33 | 0.49 | 13 | - |
| Example 2 | Sample B | ↑ | ↑ | ↑ | ↑ | 0.80 | 50 | - |
| Example 3 | Sample C | ↑ | ↑ | ↑ | ↑ | 0.70 | 14 | ± |
| Example 4 | Sample D | ↑ | ↑ | ↑ | ↑ | 0.68 | 12 | - |
| Comparative Example 1 | Sample E | ↑ | ↑ | ↑ | ↑ | 1.0 | 89 | - |
| Comparative Example 2 | Sample F | ↑ | ↑ | ↑ | ↑ | 2.1 | 191 | - |
| Comparative Example 3 | Sample G | ↑ | ↑ | ↑ | ↑ | 1.5 | 18 | + |
| Comparative Example 4 | Sample H | ↑ | ↑ | ↑ | ↑ | 1.1 | 23 | + |
| Comparative Example 5 | Sample I | ↑ | ↑ | ↑ | ↑ | 1.3 | 12 | +++ |
| Example 5 | Sample A | 1 | 94 | 5 | 17:83 | 0.87 | 7 | - |
| Example 6 | Sample B | ↑ | ↑ | ↑ | ↑ | 0.86 | 5 | - |
| Example 7 | Sample C | ↑ | ↑ | ↑ | ↑ | 0.83 | 5 | - |
| Example 8 | Sample D | ↑ | ↑ | ↑ | ↑ | 10.3 | 4 | - |
| Comparative Example 6 | Sample E | ↑ | ↑ | ↑ | ↑ | 1.1 | 4 | - |
| Comparative Example 7 | Sample F | ↑ | ↑ | ↑ | ↑ | 1.6 | 4 | - |
| Comparative Example 8 | Sample G | ↑ | ↑ | ↑ | ↑ | 1.8 | 4 | - |
| Comparative Example 9 | Sample H | ↑ | ↑ | ↑ | ↑ | 1.6 | 5 | ± |
| Comparative Example 10 | Sample I | ↑ | ↑ | ↑ | ↑ | 1.3 | 5 | ++ |

| | | | | | | | | |
|---|---|---|---|---|---|---|---|---|
| * The mixing ratios in Examples 2 to 4 and Comparative Examples 1 to 5 are the same as that in Example 1. * The mixing ratios in Examples 6 to 8 and Comparative Examples 6 to 10 are the same as that in Example 5. * P/O ratio: mixing ratio of protein/oil | | | | | | | | |

### (Discussion)

In the Comparative Examples, no emulsion composition having less than 1 µm of average particle diameter of emulsion particles were prepared under any condition. On the other hand, in almost all the examples, an emulsion composition having less than 0.9 µm of average particle diameter in wide blending ratio of fat and protein, and thus it was suggested that it was a good emulsion composition having high emulsion stability. In addition, the viscosity was sufficiently lower than that of the corresponding Comparative Example, and it was confirmed that the workability in producing a product using the present emulsion composition was improved.

### (Test Example 2) Studying of composition of protein-containing fat emulsion composition

A protein-containing fat emulsion composition was prepared in the same manner as in Production Example except that sample A as vegetable protein material, dextrin "TK-16" (manufactured by Matsutani Chemical Co., Ltd.) as carbohydrate, and water were used in aqueous phase, and each raw materials was adjusted so that a ratio of protein:fat:carbohydrate was as shown in Table 4, and that an amount of protein (wet basis) in the emulsion composition was adjusted to 2% or 5%. An average particle diameter, a presence or absence of centrifugal precipitation, and a viscosity of the obtained various emulsion compositions were measured, and the quality evaluation results are summarized in Table 5.

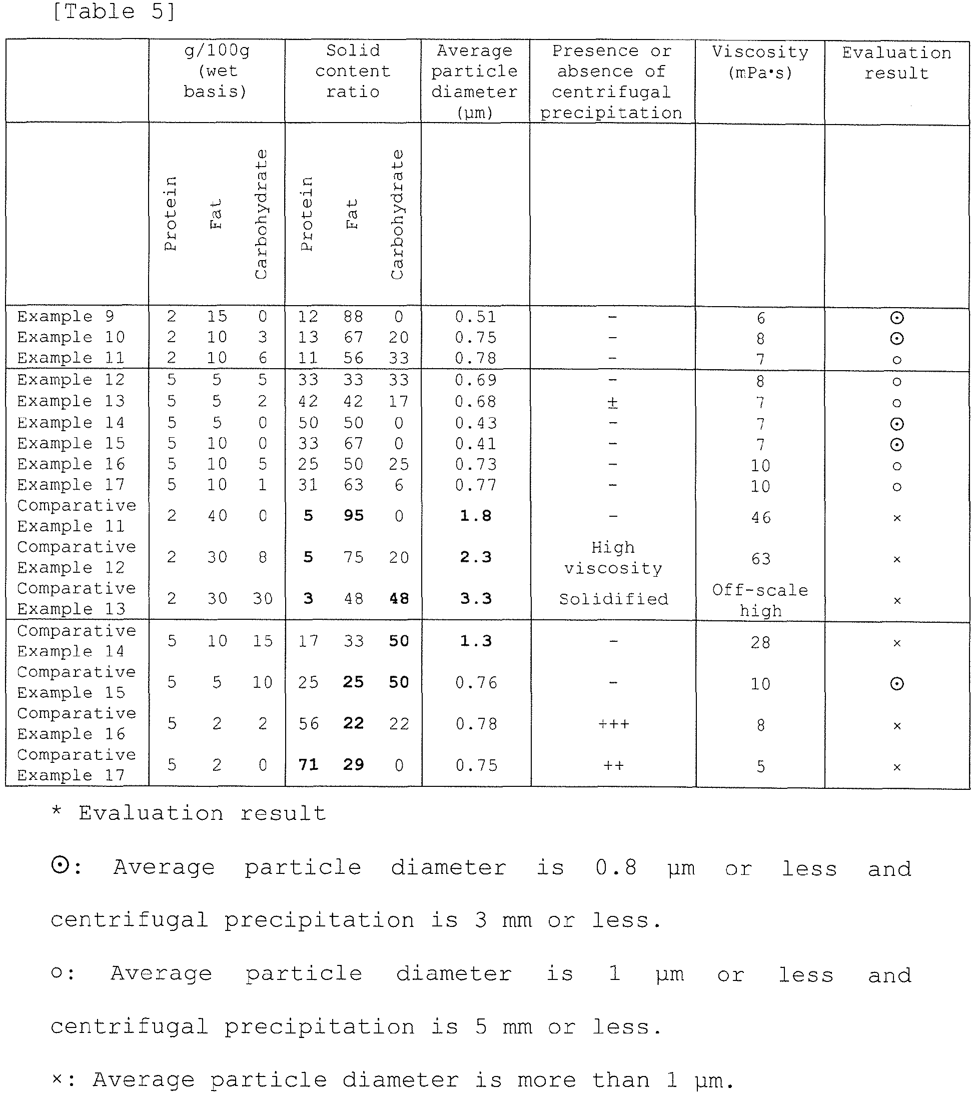

### (Discussion)

In the ranges of too small adding amount of the protein material as in Comparative Examples 11 to 13 and large adding amount of carbohydrate and small adding amount of protein as in Comparative Examples 13 and 14, it was difficult to prepare fine emulsion particles of 1 µm or less. As a result, there was concern about the stability of the emulsion.

In addition, as shown in Comparative Example 16, too small adding amount of fat resulted in that a stability of the emulsion composition was decreased regardless of the fine emulsion particles of less than 1 pm, an emulsion destruction was occurred easily by centrifugation performed as an accelerated test of the storage test, and that a precipitate was easily generated.

Regarding Comparative Example 15, although good evaluation results of physical properties were obtained, more than 50% of sugar content caused relatively low ratio of fat and protein, and thus it had less versatility of the protein-containing fat emulsion composition as an intermediate raw material, which was not preferable in viewpoint of practicality.

### (Test Example 3) Studying of mixed product with animal protein

A protein-containing fat emulsion composition was prepared in the same manner as in Production Example except that a mixture of sample A and sodium caseinate at a protein amount of 6:4 as protein, dextrin "TK-16" (manufactured by Matsutani Chemical Co., Ltd.) as carbohydrate, and water were used, and the ratio of protein:fat:carbohydrate was adjusted so that an amount of protein (wet basis) in the emulsion composition was same as that of Example 13.

An average particle diameter, a presence or absence of centrifugal precipitation, and a viscosity of the obtained emulsion composition were measured, and good results were obtained.

### (Example 18) Example of mineral addition

Based on the formulation of the protein-containing fat emulsion composition of Example 1, 0.6% calcium chloride dihydrate as a mineral was added to the aqueous phase, and pH was adjusted to 7 with sodium hydroxide, and the quality was compared.

Regarding the obtained emulsion compositions, the quality evaluation results compared to Example 1 are summarized in Table 6.

**[Table 6]**

| | Water phase | | | Oil phase | Average particle diameter (pm) | Presence or absence of centrifugal precipitation |
|---|---|---|---|---|---|---|
| | Vegetable protein material (%) | Mineral (%) | Water (%) | Oil (%) | | |
| Example 18 | 10 | 0.6 | 85 | 5 | 0.54 | |
| Example 1 | 10 | 0 | 85 | 5 | 0.49 | - |

As shown in Table 6, the emulsion composition containing sample A as the protein material did not change the emulsion stability even in the case of adding mineral, and had high mineral resistance.

### (Formulation Example 1) Formulation example 1 of liquid food

To 100 g of the protein-containing fat emulsion composition of Example 12, 4.44 g of dextrin (product name "TK-16", manufactured by Matsutani Chemical Co., Ltd.) as carbohydrate, 0.13 g of trisodium phosphate, 0.09 g of disodium hydrogen phosphate, 0.31 g of tripotassium phosphate, 0.18 g of calcium lactate, 0.22 g of calcium chloride (dihydrate), 0.35 g of magnesium sulfate (heptahydrate), and 1.5 g of succinyl monoglyceride ("POEM B-10", manufactured by Riken Vitamin Co., Ltd.) were added to prepare a liquid food having 1 kcal/mL according to the following preparation procedure.

### o Preparation procedure

A protein-containing fat emulsion composition was adjusted the temperature to 60°C, and then additional raw materials were sequentially added while stirring. The obtained mixed solution was homogenized at a pressure of 50 MPa with a homogenizer, then heat sterilized at 142°C for 7 seconds with a direct steam injection sterilizer, and then homogenized at a pressure of 50 MPa again. After the homogenization, it was cooled to 5°C with a plate cooler to obtain a thick liquid food having 1 kcal/mL.

### (Formulation example 2) Formulation example 2 of liquid food

To 100 g of the protein-containing fat emulsion composition of Example 12, 19.5 g of dextrin (product name "TK-16", manufactured by Matsutani Chemical Co., Ltd.) as carbohydrate, 0.31 g of trisodium phosphate, 0.37 g of tripotassium phosphate, 0.3 g of calcium lactate, 0.28 g of calcium chloride (dihydrate), 0.40 g of magnesium sulfate (heptahydrate), and 1.5 g of succinyl monoglyceride ("POEM B-10", manufactured by Riken Vitamin Co., Ltd.) were added to prepare a liquid food having 1.5 kcal/mL according to the preparation procedure of formulation example 1.

### (Formulation Example 3) Formulation example 3 of liquid food

An aqueous phase was prepared by mixing 7.39 g of sample D as a vegetable protein material, 0.37 g of trisodium phosphate, 0.37 g of tripotassium phosphate, 0.24 g of calcium lactate, 0.33 g of calcium chloride (dihydrate), and 0.48 g of magnesium sulfate (heptahydrate), with respect to 100g of protein-containing fat emulsion composition, adjusting pH of the mixture to 7 with an aqueous sodium hydroxide solution, and then adjusting an amount of the aqueous phase with water. An oil phase was 8.19 g of rapeseed oil. A protein-containing fat emulsion composition was prepared by mixing the aqueous phase, the oil phase, and 1.18 g of succinyl monoglyceride ("POEM B-10", manufactured by Riken Vitamin Co., Ltd.) as emulsifier in the similar manner as in Production Example. A liquid food having 1.5 kcal/mL was prepared by adding and dissolving 18.9 g of dextrin (product name "TK-16", manufactured by Matsutani Chemical Co., Ltd.) as carbohydrate to the protein-containing fat emulsion composition with stirring.

The results of measuring viscosity, average particle diameter, and presence or absence of centrifugal precipitation of the liquid foods obtained in Formulation Examples 1 to 3 are summarized in Table 7.

**[Table 7]**

| | Average particle diameter (pm) | Viscosity (mPa·s) | Presence or absence of centrifugal precipitation |
|---|---|---|---|
| Formulation Example 1 | 0.54 | 12 | - |
| Formulation Example 2 | 0.63 | 30 | - |
| Formulation Example 3 | 0.56 | 39 | - |

As shown in Table 7, the liquid food prepared using the present emulsion composition was simply produced by simply mixing carbohydrate, various mineral, and phosphate as necessary nutrition without worrying about an adverse effect on the quality due to a reaction of them and protein material without adding milk protein such as sodium caseinate, which is generally added in a liquid food. In addition, as shown in Formulation Example 3, a liquid food having adjusted calorie was simply prepared by preparing a protein-containing fat emulsion composition containing mineral, and adding dextrin to the composition. The obtained liquid food had a quality maintaining low viscosity and emulsion stability for practical use.

### (Formulation Example 4) Formulation example of whitener

To 100 g of the protein-containing fat emulsion composition of Example 15, 15 g of sunflower oil as fat, 0.074 g of disodium hydrogen phosphate, 0.124 g of sodium polyphosphate, 0.124 g of sodium citrate, 1 g of granulated sugar, and 1.5 g of sucrose fatty acid ester ("DK ESTER F-160", manufactured by Dai-ichi Kogyo Seiyaku Co., Ltd.) as emulsifier were added to prepare a whitener by a conventional method.

Generally, milk protein such as sodium caseinate is added in a whitener. However, the whitener having high emulsion stability with 31.5 mPa·s of viscosity and 0.68 µm of average particle diameter was simply prepared using the present emulsion composition without adding milk protein. In addition, feathering did not occur when it was added to coffee.

As described above, by selecting and combining a specific protein: fat and oil: carbohydrate composition and a vegetable protein material having specific characteristics, even if the protein is only a vegetable protein, the emulsion stability is high and the mineral content is high. It was possible to obtain a protein-containing oil and fat emulsified composition that retained resistance and heat resistance. It was shown that by using this as an intermediate raw material, the above-mentioned stable emulsified food can be easily produced without using milk protein such as sodium caseinate.

## Claims

1. A protein-containing fat emulsion composition for use in a production of emulsified food, comprising 10 to 70% by mass protein, 30 to 90% by mass fat and 0 to 40% by mass carbohydrate, with respect to a total amount of protein, fat and carbohydrate, which is assumed as 100% by mass, wherein 50% by mass or more of the protein is derived from a vegetable protein material having all the following characteristics a) to d):
a) a protein content in a solid content is 70% by mass or more,
b) NSI is 80 or more,
c) measured molecular weight distribution shows that an area ratio of 10000 Da or more is 50 to 80%, and that an area ratio of 2000 Da or more to less than 10000 Da is 10 to 40%,
d) gel is not formed by heating 22% by mass the protein solution at 80°C for 30 minutes.

2. The protein-containing fat emulsion composition for use in a production of emulsified food according to claim 1, wherein the composition comprises 20 to 60% by mass protein and 40 to 80% by mass fat, with respect to a total amount of protein, fat and carbohydrate, which is assumed as 100% by mass.

3. The protein-containing fat emulsion composition for use in a production of emulsified food according to claim 1, wherein an area ratio of less than 2000 Da in the measured molecular weight distribution is 13% or less.

4. The protein-containing fat emulsion composition for use in a production of emulsified food according to claim 1, wherein the area ratio of 10000 Da or more is 60 to 75%, the area ratio of 2000 Da or more to less than 10000 Da is 10 to 35%, and where the area ratio of less than 2000 Da is 9% or less.

5. The protein-containing fat emulsion composition for use in a production of emulsified food according to claim 1, wherein the composition does not comprise a milk protein.

6. The protein-containing fat emulsion composition for use in a production of emulsified food according to claim 1, wherein the composition does not comprise an animal protein.

7. The protein-containing fat emulsion composition for use in a production of emulsified food according to claim 1, wherein an aqueous solution of the vegetable protein material containing 10% by mass protein has 50 mPa·s or less of viscosity.

8. The protein-containing fat emulsion composition for use in a production of emulsified food according to claim 1, wherein an average particle diameter of the composition is 1 µm or less.

9. The protein-containing fat emulsion composition for use in a production of emulsified food according to claim 1, further comprising a polyvalent metal ion.

10. An emulsified food comprising the protein-containing fat emulsion composition for use in a production of emulsified food according to any one of claims 1 to 9.

11. The emulsified food according to claim 10, wherein the food comprises 0.1 to 99% by mass the protein-containing fat emulsion composition relative to the emulsified food.

12. The emulsified food according to claim 10, wherein the emulsified food does not comprise caseinate, but general type of the emulsified food comprises caseinate.

13. The emulsified food according to claim 10, which is thick liquid food or whitener.
